Europäisches Patentamt

(19) European Patent Office

Office européen des brevets

(11) Numéro de publication : **0 302 785 B1**

# (12) FASCICULE DE BREVET EUROPEEN

(45) Date de publication du fascicule du brevet :
**04.12.91 Bulletin 91/49**

(51) Int. Cl.⁵ : **C03B 19/10,** C03C 21/00,
C03C 11/00

(21) Numéro de dépôt : **88402008.2**

(22) Date de dépôt : **02.08.88**

(54) Technique de production de microsphères en silice.

(30) Priorité : **05.08.87 FR 8711126**

(43) Date de publication de la demande :
**08.02.89 Bulletin 89/06**

(45) Mention de la délivrance du brevet :
**04.12.91 Bulletin 91/49**

(84) Etats contractants désignés :
**AT BE CH DE ES FR GB IT LI LU NL SE**

(56) Documents cités :
**EP-A- 0 165 875**
**EP-A- 0 236 228**
**FR-A- 1 216 976**
**GB-A- 1 076 224**

(73) Titulaire : **SAINT-GOBAIN VITRAGE
INTERNATIONAL
18, avenue d'Alsace
F-92400 Courbevoie (FR)**

(72) Inventeur : **Garnier, Patrick
5, rue Bosio
F-75016 Paris (FR)**
Inventeur : **Abriou, Daniel
3, avenue des Verveines
F-93220 Gagny (FR)**
Inventeur : **Beghin, Benoit
73, rue Belliard
F-75018 Paris (FR)**

(74) Mandataire : **Le Vaguerèse, Sylvain Jacques
et al
SAINT-GOBAIN RECHERCHE 39, quai Lucien
Lefranc
F-93300 Aubervilliers Cédex (FR)**

## Description

L'invention est relative à la production de microsphères dont la composition fait apparaitre une très forte teneur en silice.

Les microsphères minérales sont des produits connus notamment comme charges de certains matériaux composites, en particulier comme charges dans des résines synthétiques ou des bétons. Pour ces usages, les microsphères minérales sont ordinairement constituées d'un verre silico-sodo-calcique du type de ceux les plus usuels pour la fabrication des vitrages par exemple. Ces matériaux se prêtent bien au traitement aboutissant à la production des microsphères et présentent un ensemble de qualités satisfaisantes.

Pour certaines applications spécifiques cependant, il est nécessaire d'avoir recours à des microsphères présentant un caractère réfractaire supérieur à celui des microsphères constituées de ces verres usuels.

La production de microsphères en verre est conduite industriellement en soumettant des particules du verre à un traitement thermique suivi d'un refroidissement instantané. Les gaz, libérés par la température élevée atteinte, assurent l'expansion des particules et, dans le refroidissement qui succède à ce traitement, le verre des sphères creuses formées est figé immédiatement empêchant un collapsus. Ce traitement est effectué, par exemple, par passage des particules de verre dans la flamme d'un brûleur opérant à haute température.

Cette technique est possible en raison des températures de ramollissement et de fusion relativement basses des verres usuels. Pour les particules de verre à forte teneur en silice (plus de 90% en poids), les températures pour lesquelles une viscosité satisfaisante pour la formation des sphères est atteinte, viscosité dont le logarithme est voisin de 2, se situent à environ 1700°C et ne sont pas inférieures à 1600°C. Dans ces conditions, un traitement du type de celui mis en oeuvre pour la production des microsphères de verre n'est pas envisageable.

Pour contourner cette difficulté, les techniques proposées antérieurement pour la production de microsphères à forte teneur en silice passent par la production d'un gel d'un borosilicate. Cette technique a été décrite à plusieurs reprises, notamment dans le brevet publié USP 4336338. La production des microsphères selon cette technique comprend la formation d'un gel de borosilicate en milieu aqueux avec divers solvants, le séchage du gel, le broyage et le traitement thermique relativement complexe faisant passer les particules dans un four présentant plusieurs zones successives maintenues à des températures distinctes. Il s'agit d'un mode de production relativement délicat et coûteux.

L'invention propose une nouvelle technique de production de microsphères à forte teneur en silice qui évite le passage par une phase gel et les inconvénients qui en résultent.

Selon l'invention, la production de microsphère creuses à forte teneur en silice comprend la formation d'un verre dont la teneur en silice est comprise entre 60 et 80% en poids, le restant étant constitué essentiellement d'oxyde de bore pour une teneur ne dépassant pas 15% et d'oxydes alcalins pour une teneur choisie de manière à maintenir la température, pour laquelle le logarithme de la viscosité est inférieur à 2, inférieure à 1400°C, le broyage du verre ainsi formé à l'état de particules dont les dimensions sont inférieures à 100 micromètres, le passage des particules dans la flamme d'un brûleur dont la température est maintenue au moins égale à 1500°C suivi d'un brusque refroidissement et le traitement des microsphères produites au moyen de compositions connues pour la désalcalinisation superficielle des verres.

Par microsphère à forte teneur en silice, on entend des produits sont la composition pondérale est au moins de 92% de silice et, de préférence, au moins 95% de silice. Ces produits constitués de microsphères creuses unicellulaires présentent, par rapport aux produits analogues formés de verres traditionnels, une résistance thermique très sensiblement accrue.

En partant d'un verre dont la teneur est comprise entre 60 et 80% de silice, le complément étant essentiellement constitué d'oxyde de bore et d'oxydes alcalins, les conditions de viscosité nécessaires pour le traitement peuvent être conservées dans un domaine compatible avec un traitement thermique dans la flamme d'un brûleur. Les températures de ramollissement pour le verre des particules initiales restent inférieures à environ 1400°C de sorte que leur traitement peut être conduit de façon satisfaisante dans un brûleur dont la température est de 1500°C ou plus. La température visée est celle pour laquelle le logarithme de la viscosité est égal à 2. Cet écart entre la température de ramollissement et celle de la flamme est suffisant pour traiter des particules très petites dont l'inertie thermique est, par conséquent, faible.

Les dimensions des particules initiales sont inférieures à 100 micromètres et, plus usuellement, inférieures à 50 micromètres. Les dimensions les plus utilisées sont inférieures à 30 micromètres et le plus souvent comprises entre 2 et 25 micromètres, ce qui permet d'obtenir des microsphères très petites faciles à utiliser comme charge. Avec les particules les plus petites, il est ainsi possible d'obtenir des microsphères dont les dimensions moyennes sont inférieures à 20 ou même 10 micromètres. De façon générale, les microsphères produites selon l'invention ont des dimensions moyennes quine dépassent pas 200 micromètres et restent avantageusement inférieures à 100 micromètres. Il faut souligner que par les techniques considérées, il est possible d'obtenir directement, c'est-à-dire sans tri granulométrique postérieur au traitement thermique, un produit d'une grande homogénéité. Ceci est d'autant plus important que les dimensions des microsphères recherchées sont plus petites. Par exemple on obtient directement un produit dont la teneur pondérale en microsphères de moins de 20 ou 10 micromètres est égale ou supérieure à 90%. L'homogénéité dans la distribution granulométrique qui peut être ainsi obtenue pour les très petites microsphères est bien entendu également obtenue pour celles de dimensions plus importantes. La seule condition dans les deux cas est de partir de particules de dimensions bien homogènes.

Les verres des particules renferment une teneur non négligeable en oxydes alcalins pour assurer une fusibilité suffisante des particules favorisant la formation de sphères. Une part importante des oxydes alcalins s'élimine lors du traitement à la flamme. Néanmoins, la teneur totale en oxydes alcalins n'est pas supérieure à 25% et, de préférence reste inférieure à 15%, de façon à limiter l'ampleur du traitement de désalcalinisation final. La teneur en oxydes alcalins dans le produit final n'est pas ordinairement supérieure à 4% et, avantageusement, reste inférieure à 3%.

La présence de bore dans le verre initial est utile, d'une part pour contribuer à la fusibilité des particules et, d'autre part pour favoriser l'élimination des oxydes alcalins au cours du traitement thermique. En tant qu'agent de fusibilité le bore, à teneur équivalente, est un peu moins efficace comme agent de fusion comparé aux oxydes alcalins. Vis-à-vis de ceux-ci, il présente par contre l'avantage d'être plus volatile à température élevée et donc de s'éliminer relativement bien. En outre, comme indiqué ci-dessus, il se combine aux oxydes alcalins pour former des borates qui s'éliminent également bien. A l'inverse, il est important pour conserver les propriétés "réfractaires" des microsphères produites, que la teneur en oxyde de bore dans le produit final soit inférieure à 5% et, de préférence inférieure à 4%. Pour cette raison, la teneur en bore des particules initiales ne dépasse pas ordinairement 15% et, de préférence pas 10%. De façon préférée, le rapport des teneurs pondérales $B_2O_3$/oxydes alcalins est maintenu entre 0,5 et 2.

En dehors des constituants énoncés précédemment, le verre des particules initiales peut renfermer un certain nombre de constituants dont la teneur globale ne dépasse pas ordinairement 5% de l'ensemble. Parmi ces constituants, l'alumine représente ordinairement moins de 3%. Elle se substitue, le cas échéant, à une fraction de la silice dans le réseau réfractaire. Sa teneur est cependant limitée pour ne pas altérer la matrice de silice du produit final. La substitution de l'alumine est telle par exemple dans le produit final, qu'ensemble $SiO_2$ + $Al_2O_3$ soit au moins de 93% en poids et, de préférence supérieur à 97%.

Le verre initial renferme encore avantageusement une certaine teneur en oxyde de soufre, composé favorisant l'expansion des particules lors du traitement thermique.

Vis-à-vis des verres utilisés pour la production des microsphères "traditionnelles", les verres mis en oeuvre selon l'invention se distinguent notamment par l'absence pratiquement totale d'oxyde d'éléments alcalino-terreux. Le rôle des alcalino-terreux dans les verres usuels est en partie de compléter l'action des alcalins pour ce qui concerne la fusibilité. En contrepartie, la présence d'alcalino-terreux dans les produits diminue leur caractère réfractaire. Par ailleurs, les alcalino-terreux ne peuvent pas être éliminés au cours du traitement d'expansion, ni par la suite par des moyens comparables à ceux mis en oeuvre pour les alcalins. Il est donc important d'utiliser des verres pratiquement exempts d'alcalino-terreux. Leur teneur ne dépasse pas, par exemple, 0,5% en poids de la composition.

La technique de production des particules de verre utilisée est celle décrite dans la demande de brevet européen non publiée, portant le n° EP 87400456. Selon ce document, le verre est broyé par des moyens traditionnels en ajoutant, de préférence, un agent de fluidification particulièrement lorsque l'on souhaite obtenir des particules de très faibles dimensions. Ces dernières particules ont des dimensions, par exemple inférieures à 20 micromètres ou même inférieures à 10 micromètres. L'agent de fluidification est un composé présentant une bonne affinité pour le verre. Il comprend une partie polaire portant, par exemple, des groupements hydroxyles ou des groupements amines et une partie non polaire favorisant l'indépendance des particules traitées. Ces agents de fluidification sont des produits connus pour leurs propriétés tensio-actives. Ce sont, par exemple, des polyalcanol-amines, le monopropylèneglycol ou des composés analogues.

Ces agents de fluidication sont introduits en faible quantité, ordinairement moins de 0,5% en poids.

Les particules broyées à la dimension voulue sont envoyées dans la flamme d'un brûleur selon des modalités du type de celles décrites dans la demande de brevet français publié n° 2566384. Les particules sont mises en suspension dans un courant gazeux et véhiculées par celui-ci jusqu'à un brûleur dont les caractéristiques seront précisées en relation avec les figures annexées.

La température de traitement, température de la flamme, est d'au moins 1500°C et peut s'élever jusqu'à 1750°C dans les conditions usuelles de fonctionnement au moyen de brûleurs fonctionnant au gaz naturel. Le traitement à ces températures n'est maintenu qu'une fraction de seconde. Les particules expansées sont immédiatement ramenées à des températures pour lesquelles le matériau est figé. Ceci est obtenu essentiellement par le mélange du gaz de combustion portant les microsphères avec une quantité importante d'air à température ambiante.

Les microsphères sont récupérées et reprises ensuite pour subir le traitement de désalcalinisation.

Après le traitement thermique, le verre constituant les parois des microsphères est sensiblement modifié par rapport à celui d'origine. En particulier, la teneur en oxydes alcalins est ordinairement inférieure à 10%, même pour les teneurs initiales les plus fortes de l'ordre de 20%. L'opération de désalcalinisation a pour but de ramener la teneur en oxydes alcalins en-dessous de 4% et, de préférence en-dessous de 3%.

Le traitement selon l'invention est effectué par voie chimique. Les microsphères sont mises en contact avec un agent de désalcalinisation connu pour les traitements de surface des objets en verre. Le produit de désalcalinisation est, par exemple : de l'anhydride sulfureux, de l'acide sulfurique concentré, des sulfates, de l'acide chlorhydrique, un chlorosilane notamment le tétrachlorosilane ou tout autre composé connu pour désalcaliniser le verre.

La désalcalinisation selon l'invention est, de préférence, effectuée par voie sèche et à température élevée, de l'ordre de 200-500°C, pour accélérer les échanges. La limite supérieure de température pour ce traitement est celle au-delà de laquelle la structure du verre des microsphères serait altérée.

Un traitement préféré est conduit au moyen de sulfate d'ammonium. Dans ce cas, la température est avantageusement supérieure à 300°C. Le temps de traitement est fonction de l'intensité de l'échange. Dans tous les cas, il ne semble pas qu'un traitement prolongé au-delà de 2 heures apporte une amélioration supplémentaire de la désalcalinisation. Un traitement d'une heure en général suffit pour obtenir la désalcalinisation souhaitée.

Le traitement de désalcalinisation se fait, de préférence, par lots en four. Il peut aussi s'effectuer en continu.

Dans cette phase de désalcalinisation, la structure des microsphères influence le résultat du traitement. S'agissant d'un traitement superficiel on comprend que, selon l'épaisseur des parois des sphères, le traitement doive être plus ou moins intense pour parvenir à un taux final d'oxydes alcalins déterminé. A diamètre égal, plus les parois sont minces et donc plus la masse volumique des sphères produites est faible, plus la désalcalinisation est facile. Cette épaisseur ne dépasse pas ordinairement quelques dizièmes de micromètres, ce qui explique qu'un traitement relativement léger permette l'élimination d'une part importante des oxydes alcalins.

L'invention est décrite dans la suite, de façon détaillée, en faisant référence aux planches de figures dans lesquelles :

— la figure 1 représente, en coupe, la partie d'une installation selon l'invention dans laquelle s'effectue l'expansion des particules,

— la figure 2 représente une variante de la figure 1,

— la figure 3 est le schéma d'ensemble d'une installation telle que décrite dans la demande précitée,

— la figure 4 est un diagramme ternaire $SiO_2$, $B_2O_3$, $Na_2O$ montrant l'évolution des caractéristiques du produit aux différentes étapes du traitement.

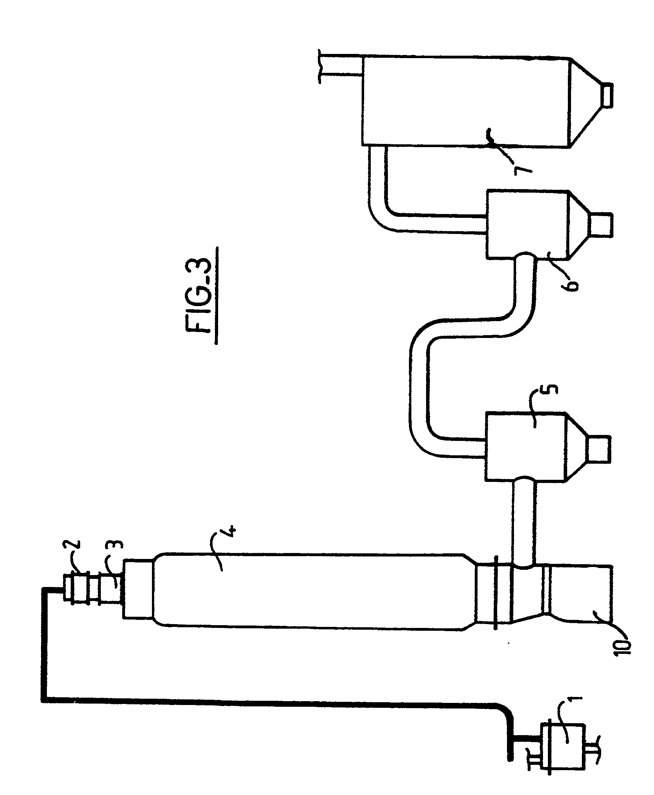

L'installation de production des microsphères, présentée à la figure 3, comprend les éléments suivants : un dispositif 1 pour la mise en suspension des particules dans un courant gazeux et leur transport jusqu'à la chambre de combustion d'un brûleur 2, le brûleur lui-même, une chambre 3 dans laquelle la combustion se poursuit, une enceinte de trempe 4. A cette partie de l'installation, dans laquelle s'effectue le traitement conduisant à l'expansion des microsphères, succède une série d'éléments dont le rôle est de séparer les sphères formées des gaz qui les entrainent d'une part et, d'autre part des poussières ou particules non expansées, ou encore d'agrégats de particules collées les unes aux autres. Sur la figure 3, l'ensemble des éléments de récupération des microsphères comprend un présélecteur 10, deux cyclones 5 et 6 et un filtre à manches 7.

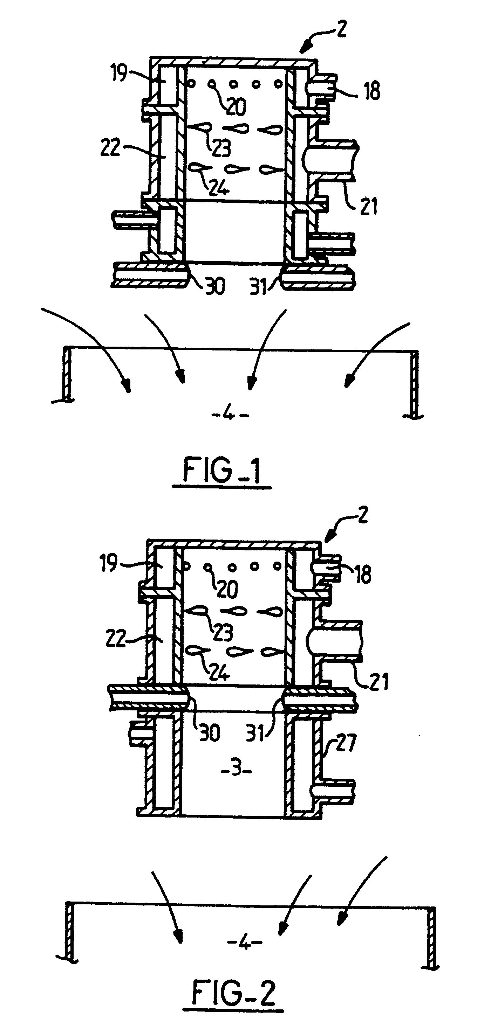

Les particules de verre sont introduites dans la flamme du brûleur dans des conditions qui peuvent être celles décrites dans la demande française précitée ou dans des conditions légèrement modifiées. A ces dernières correspondent les deux types d'installations représentées aux figures 1 et 2.

Dans la configuration de la figure 2, le courant gazeux portant les particules est introduit par les canalisations 30 et 31 dans le brûleur 2. La figure 2 présente deux orifices d'introduction des particules mais, pour bien distribuer celles-ci dans la flamme, on peut prévoir un nombre d'orifices plus grand, les orifices dans ce cas étant répartis régulièrement tout autour du brûleur. L'alimentation en gaz combustible s'effectue par les orifices 20 communiquant avec la chambre annulaire 19. La chambre 19 est elle-même alimentée par la canalisation 18. L'air est amené par la conduite 21 dans une chambre annulaire 22 et passe dans la zone de combustion par deux séries d'orifices 23 et 24. Ces derniers sont orientés de façon à communiquer à l'air introduit des mouvements de rotation de sens inverses. Le brûleur est prolongé par une chambre de combustion 3, délimitée par une double paroi métallique 27, dans laquelle circule un liquide de refroidissement. Immédiatement après la chambre de combustion, les particules et les gaz de combustion sont dirigés vers l'enceinte cylindrique 4 largement ouverte sur l'atmosphère environnante. Le passage de la chambre de combustion 3 à l'enceinte 4 s'accompagne d'un apport d'air ambiant très important qui permet une chute de température très brutale. Le mélange air-gaz de combustion est ramené en une fraction de seconde de la température de la flamme à une température inférieure à celle de ramollissement du verre. Les particules expansées se trouvent alors figées.

La disposition de la figure 2 est bien adaptée pour traiter des particules de diamètres de l'ordre d'une dizaine de micromètres ou moins. Il est apparu aux inventeurs que le temps de traitement pouvait être encore écourté pour les particules les plus petites, de l'ordre de 1 à 10 micromètres. Pour celà une configuration du type de celle représentée à la figure 1 peut être utilisée. Dans cette configuration, l'introduction des particules au moyen du gaz vecteur s'effectue, comme précédemment, par l'intermédiaire d'orifices 30, 31 constitués par les extrémités des canalisations conduisant les particules. Ces orifices sont situés immédiatement sous le brûleur et sont orientés de façon à diriger les particules vers le coeur du flux de gaz de combustion.

## EXEMPLE DE PRODUCTION SELON L'INVENTION

L'élaboration du verre s'effectue de façon traditionnelle. Le verre préparé répond à la composition suivante:

| | | | | | |
|------|------|---|---|-----|---|
| $SiO_2$ | 72 | % | $Al_2O_3$ | 1 | % |
| $B_2O_3$ | 7 | % | $SO_3$ | 1,2 | % |
| $Na_2O$ | 18,8 | % | | | |

Le broyage conduit à des particules dont les dimensions sont situées pour 80% entre 6 et 15 micromètres. Ces particules sont passées dans la flamme du brûleur de la figure 1. L'alimentation se fait à raison de 5 kg/h. Le brûleur est alimenté par 12 m³/h de gaz et 110 m³/h d'air. La température de la flamme s'établit à 1580°C. L'analyse des microsphères produites fait apparaitre la composition suivante :

| | | | | | |
|------|------|---|---|-----|---|
| $SiO_2$ | 87 | % | $Al_2O_3$ | 1,1 | % |
| $B_2O_3$ | 2,2 | % | Divers | 0,3 | % |
| $Na_2O$ | 9,4 | % | | | |

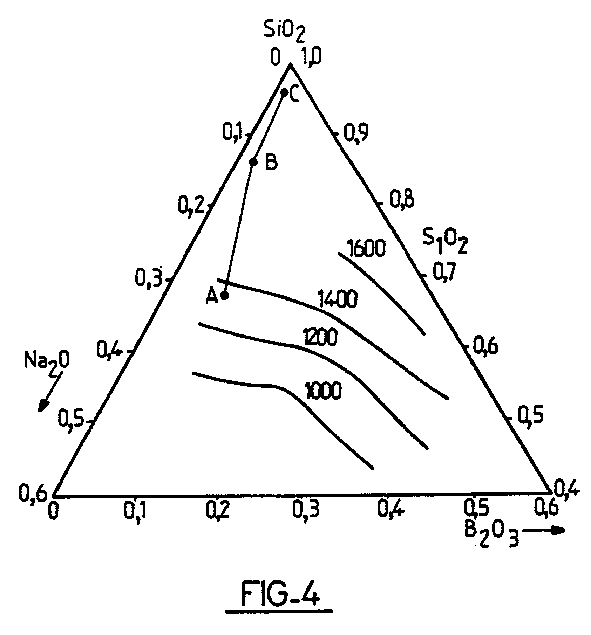

On constate ainsi une très importante diminution des teneurs en oxyde de bore et de sodium et un accroissement correspondant de la teneur en silice. Sur la diagramme de la figure 4, qui représente la composition molaire ternaire des produits selon l'invention, cette transformation se traduit par le passage du point A au point B.

Sur le diagramme, sont également représentées les courbes correspondant aux différentes compositions qui, pour une température donnée, présentent une viscosité dont le logarithme est 2. On voit sur la figure 4 que la composition de l'exemple choisi atteint cette viscosité pour une valeur de l'ordre de 1200°C.

Les microsphères obtenues sont placées dans un récipient hermétique avec du sulfate d'ammonium. Le poids de sulfate d'ammonium est environ 20% du poids des microsphères. L'ensemble est porté dans un four à 550°C pendant une heure. Après refroidissement, les microsphères sont lavées à l'eau pour éliminer le sulfate de sodium déposé à leur surface. Après lavage, l'analyse des microsphères est la suivante :

| | | | | | |
|------|------|---|---|-----|---|
| $SiO_2$ | 95,2 | % | $Al_2O_3$ | 1,2 | % |
| $B_2O_3$ | 2,3 | % | Divers | 0,3 | % |
| $Na_2O$ | 1,0 | % | | | |

Le traitement chimique a permis de réduire de façon très nette la teneur en sodium des microsphères sans altérer sensiblement celle des autres constituants.

Sur le diagramme de la figure 4, la désalcalinisation correspond au passage du point B au point C.

La masse volumique réelle de ces microsphères, mesurée au pycnomètre à hélium, s'établit à 0,36 g/cm³ et le diamètre moyen est de 15 micromètres.

## Revendications

1. Procédé de production de microsphères creuses à forte teneur en silice dans lequel on utilise pour matériau initial un verre dont la teneur en silice est comprise entre 60 et 80% en poids, le restant étant essentiellement constitué d'oxyde de bore dont la teneur ne dépasse pas 15% et d'oxyde(s) alcalin(s) dont la teneur est choisie de manière à maintenir la température, pour laquelle le logarithme de la viscosité est égal à 2, inférieure à 1400°C, ce verre est réduit en fines particules d'une dimension inférieure à 100 µm par broyage, ces particules sont passées dans la flamme d'un brûleur à une température au moins égale à 1500°C et brusquement refroidies, les microsphères produites sont récupérées et sont mises en contact avec un agent de désalcalinisation.

2. Procédé selon la revendication 1 dans lequel la teneur en oxyde(s) alcalin(s) des particules de verre traitées ne dépasse pas 25%.

3. Procédé selon l'une des revendications précédentes dans lequel la composition des particules de verre traitées renferme moins de 0,5% d'oxydes alcalino-terreux.

4. Procédé selon l'une des revendications précédentes dans lequel les particules traitées ont une dimension inférieure à 50 micromètres.

5. Procédé selon la revendication 1 dans lequel l'agent de désalcalinisation est un composé du groupe constitué par : l'anhydride sulfureux, l'acide sulfurique concentré, l'acide chlorhydrique, les sulfates, le tétrachlorosilane.

6. Procédé selon la revendication 5 dans lequel l'agent de désalcalinisation est le sulfate d'ammonium et le traitement de désalcalinisation s'effectue à une température supérieure à 300°C.

7. Microsphères creuse à teneur en silice supérieure à 95% et dont la teneur en oxyde(s) alcalin(s) est inférieure à 3% et dont le diamètre moyen est inférieur à 20 micromètres.

## Patentansprüche

1. Verfahren zur Herstellung von Mikro-Hohlkugeln mit hohem Siliziumdioxidgehalt, bei dem man als Ausgangsmaterial Glas mit einem Siliziumdioxidgehalt zwischen 60 und 80 Gewichts-% verwendet, wobei der Rest im wesentlichen aus Boroxid, dessen Gehalt 14% nicht übersteigt, und alaklische(n) Oxid(en) gebildet ist, dessen/deren Gehalt so gewählt ist, daß die Temperatur, für die der Logarithmus der Viskosität gleich 2 ist, unter 1400°C gehalten wird, bei dem das Glas durch Zermahlen in kleine Teilchen mit Abmessungen von weniger als 100 µm zerkleinert wird, wobei diese Teilchen bei einer Temperatur von wenigstens 1500°C in die Flamme eines Brenners geführt und dann schroff abgeschreckt werden, die erzeugten Mikrokugeln gesammelt und mit einem Entalkalinisierungsmittel in Kontakt gebracht werden.

2. Verfahren nach Anspruch 1, bei dem der Gehalt an alkalischen Oxid(en) der behandelten Glasteilchen 25% nicht übersteigt.

3. Verfahren nach einem der vorhergehenden Ansprüche, bei dem die Zusammensetzung der behandelten Glasteilchen weniger als 0,5% Alkalierdoxide einschließt.

4. Verfahren nach einem der vorhergehenden Ansprüche, bei dem die behandelten Teilchen Abmessungen von weniger als 50 Mikrometern haben.

5. Verfahren nach Anspruch 1, bei dem das Entalkalinisierungsmittel eine Verbindung der Gruppe ist, die aus Schwefeldioxid, konzentrierte Schwefelsäure, Salzsäure, Sulfaten und Tetrachlorsilan besteht.

6. Verfahren nach Anspruch 5, bei dem das Entalkalinisierungsmittel Ammoniumsulfat ist und die Entalkalinisierungsbehandlung bei einer Temperatur von mehr als 300°C durchgeführt wird.

7. Mikro-Hohlkugeln mit einem Siliziumdioxidgehalt von mehr als 95%, deren Gehalt an alkalischem(n) Oxid(en) unter 3% liegt und deren durchschnittlicher Durchmesser weniger als 20 Mikrometer beträgt.

## Claims

1. Process for the production of hollow microspheres having a high silica content, in which the initial material used is a glass with a silica content between 60 and 80% by weight, the remainder essentially being constituted by boron trioxide, whose content does not exceed 15% and alkali metal oxide or oxides, whose content is chosen in such a way as to maintain the temperature for which the logarithm of the viscosity is equal to 2 below 1400°C, said glass being reduced into fine particles with a size below 100 µm by grinding, said particles being passed into the flame of a burner at a temperature of at least 1500°C and are suddenly cooled, the microspheres produced being recovered and contacted with a dealkalization agent.

2. Process according to claim 1, wherein the alkali metal oxide or oxides content of the treated glass particles does not exceed 25%.

3. Process according to any one of the preceding claims, wherein the composition of the treated glass particles contains less than 0.5% of alkaline earth oxides.

4. Process according to any one of the preceding claims, wherein the treated particles have a size below 50 micrometres.

5. Process according to claim 1, wherein the dealkalization agent is a compound from the group constituted by sulphurous anhydride, concentrated sulphuric acid, hydrochloric acid, sulphates and tetrachlorosilane.

6. Process according to claim 5, wherein the dealkalization agent is ammonium sulphate and the dealkalization treatment takes place at a temperature above 300°C.

7. Hollow microspheres having a silica content above 95% and whose alkali metal oxide or oxides content is below 3% and whose mean diameter is below 20 micrometres.

FIG_1

FIG_2

8

FIG_3

FIG-4